# EUROPÄISCHE PATENTSCHRIFT

(11) **EP 2 628 240 B1**
(45) Veröffentlichungstag und Bekanntmachung des Hinweises auf die Patenterteilung: **24.12.2014**
(21) Anmeldenummer: 11770400.7
(22) Anmeldetag: 05.10.2011
(51) Int. Cl.: H02P 6/20, D06F 37/30, H02P 29/02, H02P 1/02

(54) **ANTRIEBSVORRICHTUNG ZUM ANTREIBEN EINER KOMPONENTE EINES HAUSGERÄTS, HAUSGERÄT UND VERFAHREN ZUM BETREIBEN EINES HAUSGERÄTS**
DRIVE DEVICE FOR DRIVING A COMPONENT OF A HOUSEHOLD APPLIANCE, HOUSEHOLD APPLIANCE AND METHOD FOR OPERATING A HOUSEHOLD APPLIANCE
DISPOSITIF D'ENTRAÎNEMENT SERVANT À ENTRAÎNER UN ÉLÉMENT D'APPAREIL MÉNAGER, APPAREIL MÉNAGER ET PROCÉDÉ POUR FAIRE FONCTIONNER UN APPAREIL MÉNAGER

(30) Priorität: 15.10.2010 DE 102010042492
(43) Veröffentlichungstag der Anmeldung: 21.08.2013
(73) Patentinhaber: BSH Bosch und Siemens Hausgeräte GmbH, 81739 München (DE)
(72) Erfinder: ALBAYRAK, Hasan, Gökcer, 13469 Berlin (DE); BÖTTGER, Torsten, 01445 Radebeul (DE); LAUBE, Falk, 13158 Berlin (DE); SKRIPPEK, Jörg, 14641 Wustermark (DE)
(86) Internationale Anmeldenummer: PCT/EP2011/067345
(87) Internationale Veröffentlichungsnummer: WO 2012/049041

(56) Entgegenhaltungen:
- US-A1- 2005 029 976
- US-B1- 6 445 879

## Beschreibung

Die Erfindung betrifft eine Antriebsvorrichtung zum Antreiben einer Komponente eines Hausgeräts. Die Antriebsvorrichtung umfasst einen elektrischen Antriebsmotor. Eine Steuereinrichtung stellt eine an den Antriebsmotor abgegebene elektrische Leistung ein. Die Erfindung betrifft außerdem ein Hausgerät sowie ein Verfahren zum Betreiben eines Hausgeräts.

Es geht vorliegend insbesondere um eine Antriebsvorrichtung für eine Wäschetrommel eines Hausgeräts, nämlich insbesondere einer Waschmaschine. Solche Antriebsvorrichtungen zum Antreiben einer Wäschetrommel sind bereits aus dem Stand der Technik bekannt. Eine solche ist beispielsweise in der Druckschrift DE 10 2008 016 472 A1 beschrieben, wie auch in der Druckschrift DE 102 34 053 C1. Die bekannten Antriebsvorrichtungen umfassen eine elektronische Schaltungsanordnung, die zum Wandeln einer elektrischen Netzspannung eines Versorgungsnetzes in eine Zwischenkreisgleichspannung dient. Mit der Zwischenkreisgleichspannung wird der Antriebsmotor versorgt, nämlich mithilfe eines Wechselrichters. Vorliegend gilt das Interesse insbesondere einem bürstenlosen Gleichstrommotor bzw. einem Synchronmotor, dessen Stator permanent Magnete trägt.

Es ist Aufgabe der Erfindung, einen Weg aufzuzeigen, wie ein elektrischer Antriebmotor bei einer Antriebsvorrichtung der eingangs genannten Gattung mit möglichst geringem Materialverbrauch geschaffen werden kann.

Diese Aufgabe wird erfindungsgemäß durch eine Antriebsvorrichtung, ein Hausgerät mit sowie ein Verfahren mit den Merkmalen des jeweiligen unabhängigen Patentanspruchs gelöst. Vorteilhafte Ausführungen der Erfindung sind Gegenstand der abhängigen Patentansprüche und der nachfolgenden Beschreibung.

Eine erfindungsgemäße Antriebsvorrichtung zum mechanischen Antreiben einer Komponente eines Hausgeräts umfasst einen elektrischen Antriebsmotor und eine Steuereinrichtung, die zum Einstellen einer an den Antriebsmotor abgegebenen elektrischen Leistung ausgebildet ist. Die Antriebsvorrichtung wird mit einer Netzspannung - nämlich der elektrischen Spannung eines elektrischen Versorgungsnetzes - versorgt. Die Steuereinrichtung kann eine mit der Amplitude der Netzspannung korrelierte Messgröße erfassen und anhand der Messgröße erkennen, ob die Amplitude der Netzspannung unterhalb eines vorgegebenen Grenzwertes liegt. In einem solchen Fall begrenzt die Steuereinrichtung die elektrische Leistung auf einen Wert größer als Null.

Also erfolgt erfindungsgemäß eine Begrenzung der an den Antriebsmotor abgegebenen elektrischen Leistung dann, wenn die Amplitude der Netzspannung unterhalb eines vorgegebenen Grenzwertes liegt, nämlich beispielsweise einer Nennamplitude der Netzspannung. Die elektrische Leistung wird somit dann begrenzt, wenn die Amplitude der Netzspannung kleiner als die übliche Amplitude ist - beispielsweise kleiner als 230 Volt. Der Erfindung liegt die Erkenntnis zugrunde, dass - insbesondere bei einer Regelung einer Drehzahl des Antriebsmotors in einem Schleuderbetrieb einer Waschmaschine - die Stromstärke eines durch eine Wicklung des Antriebsmotors fließenden Motorstromes größer wird, wenn sich die Amplitude der Netzspannung verringert. Erhöht sich die Stromstärke des Motorstroms, so erhöht sich auch die Betriebstemperatur des Antriebsmotors. Gerade aus diesem Grund muss der Antriebsmotor im Stand der Technik entsprechend so aufgebaut werden, dass er der erhöhten Betriebstemperatur standhalten kann. Es ist aus diesem Grund relativ viel Material für den Aufbau des Antriebsmotors erforderlich, damit die Wärme entsprechend abgeführt werden kann. Gerade dieser Problematik begegnet die vorliegende Erfindung: Die elektrische Leistung des Antriebsmotors wird nämlich in Abhängigkeit von der jeweils augenblicklichen Amplitude der Netzspannung begrenzt. Auf diesem Wege gelingt es, auch die Betriebstemperatur des Antriebsmotors auf einen vorgegebenen Wert zu begrenzen, und es kann ein gegenüber dem Stand der Technik Material sparender Antriebsmotor geschaffen werden. Es können demnach einerseits die Herstellungskosten des Antriebsmotors gespart werden; andererseits kann somit der wertvolle Bauraum im Hausgerät gespart und gegebenenfalls ein kompakteres Hausgerät geschaffen werden.

Die Antriebsvorrichtung ist vorzugsweise zum Antreiben einer Wäschetrommel des Hausgeräts, insbesondere einer Wäschetrommel einer Waschmaschine, ausgebildet. Gerade zum Antreiben einer Wäschetrommel - insbesondere in einem Schleuderbetrieb - ist relativ viel Leistung erforderlich, die an den Antriebsmotor abgegeben wird. Speziell bei einer Wäschetrommel kommen somit die Vorteile der erfindungsgemäßen Antriebsvorrichtung vollständig zum Tragen. Sinkt die Amplitude der Netzspannung, so wird die elektrische Leistung entsprechend begrenzt, so dass automatisch auch die Drehzahl der Wäschetrommel - also zum Beispiel die Schleuderdrehzahl - sinkt. Ein solches Verhalten ist jedoch bei einer Wäschetrommel akzeptabel.

Vorzugsweise ist der Antriebsmotor ein bürstenloser Gleichstrommotor (BLDC) bzw. ein permanentmagneterregter Synchronmotor. Der Antriebsmotor kann drei Phasenstränge umfassen; dann kann die Antriebsvorrichtung einen Wechselrichter umfassen, welcher entsprechend drei Wechselspannungen bereitstellt, nämlich jeweils eine Wechselspannung für jeden Phasenstrang des Antriebsmotors. Die Wechselspannungen kann der Wechselrichter aus einer Zwischenkreisgleichspannung erzeugen. Solche Synchronmotoren, deren Rotor Permanentmagnete trägt, zeichnen sich durch hohe Wirkungsgrade gegenüber zum Beispiel Asynchronmotoren aus. Durch einen hohen Wirkungsgrad kann der Elektromotor noch kompakter ausgeführt werden, so dass auch hier Vorteile hinsichtlich der Kosten aufgrund der Materialersparnisse erzielt werden können. Ein weiterer großer Vorteil besteht bei einem bürstenlosen Gleichstrommotor in der Möglichkeit, den Motorstrom - also einen Strangstrom - exakt und ohne viel Aufwand zu erfassen, nämlich durch die Steuereinrichtung.

Wie bereits ausgeführt, kann die Steuereinrichtung in einem Schleuderbetrieb des Hausgeräts - also insbesondere einer Waschmaschine - die elektrische Leistung begrenzen. Gerade in einem Schleuderbetrieb wird nämlich der Antriebsmotor bei sehr hohen Drehzahlen betrieben; die Schleuderdrehzahl des Antriebsmotors kann - bei Annahme einer zehnfachen Übersetzung zwischen der Drehzahl der Wäschetrommel und der des Antriebsmotors - in einem Wertebereich von 4000 bis sogar 20.000 Umdrehungen pro Minute liegen. Für eine solche Schleuderdrehzahl ist entsprechend viel Leistung erforderlich. Im Stand der Technik wird die Schleuderdrehzahl des Antriebsmotors auf einen konstanten Soll-Wert geregelt, so dass der Antriebsmotor auch eine konstante elektrische Leistung aufnimmt, und zwar auch dann, wenn die Amplitude der Netzspannung gegenüber der Nennamplitude sinkt. Die Folge ist eine Erhöhung der Betriebstemperatur des Antriebsmotors durch den Anstieg der Stromstärke des Motorstromes bei Auftreten einer Unterspannung. Bei dieser Ausführungsform wird hingegen die im Schleuderbetrieb an den Antriebsmotor abgegebene Leistung bei einer Unterspannung begrenzt, so dass die Betriebstemperatur des Antriebsmotors konstant bleibt.

Die Steuereinrichtung erfasst die mit der Amplitude der Netzspannung korrelierte Messgröße und erkennt anhand dieser Messgröße, ob die Amplitude der Netzspannung unterhalb des vorgegebenen Grenzwertes liegt oder nicht. Die Messgröße ist vorzugsweise eine von der Amplitude der Netzspannung direkt proportionale Größe. Sie ist bevorzugt auch eine elektrische Spannung. Die Steuereinrichtung kann beispielsweise eine Zwischenkreisgleichspannung beziehungsweise eine geteilte Zwischenkreisgleichspannung als Messgröße erfassen, die durch eine Gleichspannungsquelle der Antriebsvorrichtung bereitgestellt wird. Die Gleichspannungsquelle kann die Zwischenkreisgleichspannung aus der Netzspannung erzeugen, nämlich beispielsweise mithilfe eines Gleichrichters und eines Zwischenkreiskondensators. Mit dieser Zwischenkreisgleichspannung kann dann der Antriebsmotor versorgt werden, dies beispielsweise unter Vermittlung eines Wechselrichters. Die Erfassung der Zwischenkreisgleichspannung hat den Vorteil, dass selbige Spannung äquivalent zu der Netzspannung bzw. direkt proportional zu der Netzspannung ist und die Steuereinrichtung somit anhand selbiger Zwischenkreisgleichspannung auf die jeweils augenblickliche Amplitude der Netzspannung zurückschließen kann. Die Zwischenkreisgleichspannung kann außerdem ohne viel Aufwand erfasst werden, nämlich beispielsweise mithilfe eines mit der Steuereinrichtung gekoppelten Spannungsteilers.

Also wird die elektrische Leistung auf einen Wert größer als Null dann begrenzt, wenn die Amplitude der Netzspannung unterhalb des vorgegebenen Grenzwertes liegt. Dieser Grenzwert kann beispielsweise gleich dem effektiven Nennwert der sinusförmigen Netzspannung sein, also beispielsweise 230 Volt. Der Grenzwert kann aber auch ein geringerer Wert sein, nämlich beispielsweise um 10 Volt, 20 Volt, 30 Volt oder 40 Volt geringer als der jeweilige effektive Nennwert der Netzspannung.

Die elektrische Leistung wird insbesondere gegenüber einem Soll-Wert für die Leistung reduziert, der bei einer Nennamplitude der Netzspannung eingestellt werden würde. Und zwar wird die elektrische Leistung vorzugsweise auf einen solchen Wert begrenzt, der einerseits größer als Null und andererseits kleiner als der Soll-Wert ist, welcher für die elektrische Leistung dann eingestellt werden würde, wenn die Amplitude der Netzspannung gleich dem Nennwert wäre. Die elektrische Leistung wird also gegenüber dem Sollwert reduziert, der bei einer ordnungsgemäßen Amplitude der Netzspannung eingestellt wird. Somit wird die Stromstärke des Motorstromes in vertretbaren Grenzen gehalten, wie auch die Betriebstemperatur des Antriebsmotors.

Die elektrische Leistung kann auf einen Wert begrenzt werden, der abhängig von der jeweils augenblicklichen Amplitude der Netzspannung beziehungsweise von dem jeweils augenblicklichen Wert der Messgröße ist. Zum Beispiel kann die elektrische Leistung sinken, wenn die Netzspannung beziehungsweise die Messgröße sinkt. Es kann somit beispielsweise die Stromstärke des Motorstromes und somit auch die Betriebstemperatur des Antriebsmotors - unabhängig von der Amplitude der Netzspannung - konstant gehalten werden.

Es kann/können beispielsweise eine Kennlinie und/oder eine mathematische Gleichung in der Steuereinrichtung abgelegt sein. Die Kennlinie und/oder die mathematische Gleichung kann/können einen Zusammenhang zwischen der elektrischen Leistung und der Messgröße wiedergeben. Die Steuereinrichtung kann dann die elektrische Leistung gemäß der abgelegten Kennlinie und/oder der Gleichung begrenzen. Also wird bei dieser Ausführungsform der Wert für die elektrische Leistung mithilfe einer Kennlinie und/oder einer Gleichung bestimmt. Eine solche Vorgehensweise ist besonders aufwandsarm: Die Steuereinrichtung muss lediglich die Messgröße erfassen und den Wert für die elektrische Leistung aus der Kennlinie ablesen und/oder mithilfe der Gleichung berechnen. Der durch die Kennlinie und/oder die Gleichung dargestellte Zusammenhang zwischen der Messgröße und der elektrischen Leistung kann beispielsweise ein linearer sowie direkt proportionaler Zusammenhang sein. Dann verringert sich die an den Antriebsmotor abgegebene Leistung linear zusammen mit der Amplitude der Netzspannung. Dies ist besonders betriebssicher: Bei einem solchen linearen Zusammenhang verbleibt die Stromstärke des Motorstromes konstant, so dass auch die Betriebstemperatur des Antriebsmotors konstant bleibt.

Die Steuereinrichtung kann auch die Stromstärke des Motorstromes erfassen und die elektrische Leistung auf einen solchen Wert begrenzen, bei welchem die Stromstärke des Motorstromes unterhalb eines vorgegebenen Schwellenwertes verbleibt. Somit verbleibt auch die Betriebstemperatur unterhalb eines definierten Grenzwertes.

Ein erfindungsgemäßes Hausgerät umfasst eine erfindungsgemäße Antriebsvorrichtung oder eine bevorzugte Ausgestaltung der erfindungsgemäßen Antriebsvorrichtung. Das Hausgerät kann beispielsweise ein Hausgerät zur Pflege von Wäschestücken, insbesondere eine Waschmaschine, sein.

Bei einem erfindungsgemäßen Verfahren zum Betreiben eines Hausgeräts wird eine Komponente des Hausgeräts durch einen elektrischen Antriebsmotor mechanisch angetrieben, und eine an den Antriebsmotor abgegebene elektrische Leistung wird mithilfe einer Steuereinrichtung eingestellt. Die Steuereinrichtung erfasst eine mit einer Amplitude einer Netzspannung, mit welcher das Hausgerät versorgt wird, korrelierte Messgröße. Die Steuereinrichtung erkennt anhand der Messgröße, ob die Amplitude der Netzspannung unterhalb eines vorgegebenen Grenzwertes liegt. In einem solchen Fall begrenzt die Steuereinrichtung die elektrische Leistung auf einen Wert größer als Null.

Die mit Bezug auf die erfindungsgemäße Antriebsvorrichtung vorgestellten bevorzugten Ausführungsformen und deren Vorteile gelten entsprechend für das erfindungsgemäße Hausgerät und das erfindungsgemäße Verfahren.

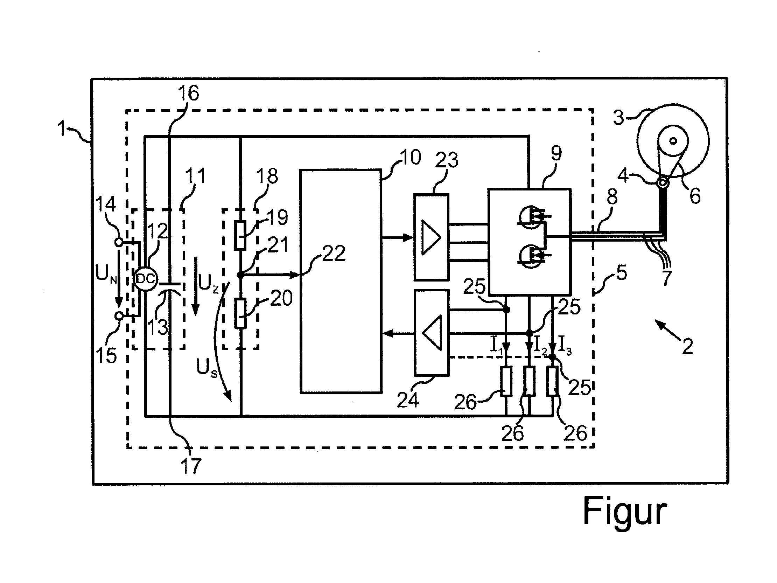

Merkmale der Erfindung ergeben sich aus den Patentansprüchen, der Figur der Zeichnung und deren nachfolgender Beschreibung. Alle vorstehend genannten Merkmale und Merkmalskombinationen sowie die nachfolgend genannten und/oder in der Figur alleine gezeigten Merkmale und Merkmalskombinationen sind nicht nur in der jeweils angegebenen Kombination, sondern auch in anderen Kombinationen oder auch in Alleinstellung verwendbar, ohne den Rahmen der Erfindung zu verlassen.

Die Erfindung wird nun anhand eines bevorzugten Ausführungsbeispiels näher erläutert, wie auch unter Bezugnahme auf die beigefügte Zeichnung.

Deren einzige Figur veranschaulicht in schematischer Darstellung ein Hausgerät mit einer Antriebsvorrichtung gemäß einer Ausführungsform der Erfindung.

Eine Waschmaschine 1, wie sie in der Figur in schematischer und höchst abstrakter Darstellung gezeigt ist, umfasst eine Antriebsvorrichtung 2, die zum mechanischen Antreiben einer in der Waschmaschine 1 angeordneten Wäschetrommel 3 eingerichtet ist. Die Wäschetrommel 3 ist in der Waschmaschine um eine horizontale Drehachse drehbar gelagert und zum Aufnehmen von Wäschestücken ausgebildet. Die Antriebsvorrichtung 2 umfasst einen Antriebsmotor 4 sowie eine Schaltungsanordnung 5 zum Betreiben des Antriebsmotors 4. Der Antriebsmotor 4 ist im Ausführungsbeispiel ein bürstenloser Gleichstrommotor bzw. ein Synchronmotor, dessen Rotor Permanentmagnete trägt.

Die Wäschetrommel 3 wird durch den Antriebsmotor 4 über einen Riemen 6 angetrieben; der Rotor des Antriebsmotors 4 ist über den Riemen 6 mit der Wäschetrommel 3 verbunden.

Der Antriebsmotor 4, und genauer gesagt sein Stator, weist drei Phasenstränge 7 auf, die mit einem Ausgang 8 der Schaltungsanordnung 5 elektrisch gekoppelt sind. An ihrem Ausgang 8 stellt die Schaltungsanordnung 5 elektrische Wechselspannungen für die Phasenstränge 7 bereit, nämlich jeweils eine Wechselspannung für jeden Phasenstrang 7. Also stellt die Schaltungsanordnung 5 einen Drehstrom für den Antriebsmotor 4 bereit.

An einem Eingang der Schaltungsanordnung 5 liegt eine Zwischenkreisgleichspannung U_{Z} an. Aus dieser Zwischenkreisgleichspannung U_{Z} erzeugt ein Wechselrichter 9 die Wechselspannung für den Antriebsmotor 4. Der Wechselrichter 9 wird durch eine Steuereinrichtung 10 angesteuert. Die Steuereinrichtung 10 kann unter entsprechender Ansteuerung des Wechselrichters 9 die Frequenz der Wechselspannungen und somit auch die Drehzahl des Antriebsmotors 4, wie auch eine an den Antriebsmotor 4 abgegebene Leistung steuern.

Zum Erzeugen der Zwischenkreisgleichspannung U_{Z} beinhaltet die Schaltungsanordnung 5 eine Gleichspannungsquelle 11, die wiederum einen Gleichrichter 12, wie auch einen Zwischenkreiskondensator 13 umfasst. Die Gleichspannungsquelle 11 erzeugt die Zwischenkreisgleichspannung U_{Z} aus einer Netzspannung U_{N} die zwischen zwei Netzanschlüssen 14, 15 anliegt. Die Netzspannung U_{N} wird durch ein elektrisches Versorgungsnetz bereitgestellt, an welches die Waschmaschine 1 angeschlossen wird. Die Zwischenkreisgleichspannung U_{Z} fällt an dem Zwischenkreiskondensator 13 ab. Und zwar liegt die Zwischenkreisgleichspannung U_{Z} zwischen einem ersten und einem zweiten Knoten 16, 17 an; an dem zweiten Knoten 17 ist ein Bezugspotential bereitgestellt.

Parallel zur Gleichspannungsquelle 11, also zwischen dem ersten und dem zweiten Knoten 16, 17, ist ein Spannungsteiler 18 geschaltet. Dieser beinhaltet einen ersten und einen zweiten Ohmschen Widerstand 19, 20, zwischen denen ein Abgriffknoten 21 liegt. Der Abgriffknoten 21 ist mit einem Eingang 22 der Steuereinrichtung 10 verbunden. Somit erfasst die Steuereinrichtung 10 eine zwischen dem Abgriffknoten 21 und dem zweiten Knoten 17 - also dem Bezugspotential - anliegende elektrische Spannung U_{S}. Diese Spannung U_{S} stellt die geteilte Zwischenkreisgleichspannung U_{Z} dar. Die Steuereinrichtung 10 erfasst also quasi die Zwischenkreisgleichspannung U_{Z}. Die Zwischenkreisgleichspannung U_{Z} ist eine zur Netzspannung U_{N} äquivalente Spannung, so dass die Steuereinrichtung 10 abhängig von der erfassten Spannung U_{S} auf die Amplitude der Netzspannung U_{N} rückschließen kann. Die Spannung U_{S} bzw. die Zwischenkreisgleichspannung U_{Z} stellt eine Messgröße dar.

Die Steuereinrichtung 10 steuert den Wechselrichter 9 unter Vermittlung einer analogen Treiberstufe 23 an. Die Steuereinrichtung 10 erfasst des Weiteren Strangströme I₁, I₂, I₃ die in den Phasensträngen 7 des Antriebsmotors 4 fließen. Dazu ist die Steuereinrichtung 10 über eine analoge Verstärkerstufe 24 mit drei Abgriffknoten 25 gekoppelt, über welche die Strangströme I₁, I₂, I₃ fließen. Selbige Strangströme I₁, I₂, I₃ fließen auch jeweils über einen Ohmschen Messwiderstand 26. Also kann die Steuereinrichtung 10 die Stromstärken der Strangströme I₁, I₂, I₃ messen.

Die Steuereinrichtung 10 ist im Ausführungsbeispiel ein Mikroprozessor. Die Berechnung eines Soll-Werts für die Drehzahl des Antriebsmotors 4 sowie die Regelung dieser Drehzahl erfolgt somit digital in der Steuereinrichtung 10.

Das Interesse gilt vorliegend einem Schleuderbetrieb der Waschmaschine 1, in welchem die Wäschetrommel 3, wie auch der Antriebsmotor 4 bei hohen Drehzahlen betrieben werden. Und zwar kann die Drehzahl des Antriebsmotors 4 im Schleuderbetrieb sogar den Wert von 20.000 Umdrehungen pro Minute erreichen.

Wie bereits ausgeführt, erfasst die Steuereinrichtung 10 die Spannung U_{S} und misst somit die Amplitude selbiger Spannung U_{S}. Die Amplitude der Spannung U_{S} ist ein direktes Maß für die Amplitude der Netzspannung U_{N} bzw. für eine elektrische Energie des Versorgungsnetzes. Die Steuereinrichtung 10 überwacht die Amplitude der Spannung U_{S} und somit auch die Amplitude der Netzspannung U_{N}. Im Schleuderbetrieb versucht die Steuereinrichtung 10 die Drehzahl des Antriebsmotors 4 prinzipiell auf einen Soll-Wert zu regeln. Dies erfolgt jedoch nur dann, wenn ein vorbestimmtes, auf die Amplitude der Spannung U_{S} bezogenes Kriterium erfüllt ist, und zwar wenn die Amplitude der Spannung U_{S} einen vorgegebenen Grenzwert nicht unterschreitet. Dieser Grenzwert kann in einem Wertebereich liegen, welcher einem Bereich der Amplitude der Netzspannung U_{N} von 190 Volt bis 230 Volt entspricht, nämlich bei einem Nennwert der Netzspannung U_{N} von 230 Volt. Also kann der Grenzwert für die Spannung U_{S} gleich einem solchen Wert sein, der einer Amplitude der Netzspannung U_{N} von 230 Volt, also der Nennamplitude entspricht.

Sinkt im Schleuderbetrieb die Amplitude der Netzspannung U_{N}, so sinkt auch die Amplitude der Spannung U_{S}, und die Steuereinrichtung 10 erkennt dies. Unterschreitet die Amplitude der Spannung U_{S} den Grenzwert - wenn beispielsweise die Amplitude Netzspannung U_{N} die Nennamplitude unterschreitet -, so regelt die Steuereinrichtung 10 die Drehzahl des Antriebsmotors 4 und somit die an den Antriebsmotor 4 abgegebene Leistung nicht mehr auf den vorgegebenen Soll-Wert. Stattdessen begrenzt die Steuereinrichtung 10 die elektrische Leistung. Dies kann beispielsweise so aussehen, dass die Steuereinrichtung 10 die Stromstärke der Strangströme I₁, I₂, I₃ trotz der geringeren Amplitude der Netzspannung U_{N} konstant hält, so dass die Stromstärke einen vorgegebenen Schwellenwert nicht überschreitet. Somit sinkt mit der Amplitude der Netzspannung U_{N} auch die an den Antriebsmotor 4 abgegebene Leistung. Diese Leistung wird somit gegenüber einem Soll-Wert bzw. einem Nennwert reduziert, welcher bei einer ordnungsgemäßen Amplitude der Netzspannung U_{N} eingestellt werden würde. Es kann in der Steuereinrichtung 10 eine Kennlinie und/oder eine mathematische Gleichung abgelegt sein, nämlich in einem Speicher der Steuereinrichtung 10. Durch eine solche Kennlinie und/oder eine solche Gleichung kann ein Zusammenhang zwischen der Amplitude der Spannung U_{S} und der elektrischen Leistung modelliert sein. Dieser Zusammenhang kann beispielsweise - zumindest in einem Drehzahlbereich - ein linearer und direkt proportionaler Zusammenhang sein. Dann stellt die Steuereinrichtung 10 die elektrische Leistung und somit auch die Drehzahl des Antriebsmotors 4 gemäß der Kennlinie und/oder der Gleichung ein. Wird bei einem linearen Zusammenhang die Amplitude der Spannung U_{S} geringer, so wird auch die an den Antriebsmotor 4 abgegebene Leistung geringer.

Für unterschiedliche Amplituden der Netzspannung U_{N} werden somit unterschiedliche maximale Werte für die elektrische Leistung festgelegt, die nicht überschritten werden dürfen. Somit wird auch die Betriebstemperatur des Antriebsmotors 4 begrenzt.

Durch eine solche Vorgehendweise - nämlich durch Begrenzung der elektrischen Leistung abhängig von der jeweils aktuellen Amplitude der Netzspannung U_{N} - wird auch eine Grenze für die Stromstärke der Strangströme I₁, I₂, I₃, wie auch für eine Betriebstemperatur des Antriebsmotors 4 gesetzt. Dies hat insbesondere Vorteile hinsichtlich der Materialeinsparung bei der Herstellung des Antriebsmotors 4. Es ist nämlich bei geringeren Betriebstemperaturen entsprechend weniger Material für den Antriebsmotor 4 erforderlich, durch welches die Wärme abgeführt werden muss. Somit können auch die Herstellungskosten des Antriebsmotors 4, wie auch der wertvolle Bauraum in der Waschmaschine 1 gespart werden.

### Bezugszeichenliste

- 1: Waschmaschine
- 2: Antriebsvorrichtung
- 3: Wäschetrommel
- 4: Antriebsmotor
- 5: Schaltungsanordnung
- 6: Riemen
- 7: Phasenstränge
- 8: Ausgang
- 9: Wechselrichter
- 10: Steuereinrichtung
- 11: Gleichspannungsquelle
- 12: Gleichrichter
- 13: Zwischenkreiskondensator
- 14, 15: Netzanschlüsse
- 16, 17: Knoten
- 18: Spannungsteiler
- 19, 20: Ohmsche Widerstände
- 21: Abgriffknoten
- 22: Eingang
- 23: Treiberstufe
- 24: Verstärkerstufe
- 25: Abgriffknoten
- 26: Ohmsche Messwiderstände
- U_{Z}: Zwischenkreisgleichspannung
- U_{N}: Netzspannung
- U_{S}: Spannung
- I₁, I₂, I₃: Strangströme

## Patentansprüche

1. Antriebsvorrichtung (2) zum Antreiben einer Komponente (3) eines Hausgeräts (1), mit einem elektrischen Antriebsmotor (4) und mit einer Steuereinrichtung (10) zum Einstellen einer an den Antriebsmotor (4) abgegebenen elektrischen Leistung, wobei die Steuereinrichtung (10) dazu ausgebildet ist, eine mit einer Amplitude einer Netzspannung (U_{N}), mit welcher die Antriebsvorrichtung (2) versorgbar ist, korrelierte Messgröße (U_{S}) zu erfassen, anhand der Messgröße (U_{S}) zu erkennen, ob die Amplitude der Netzspannung (U_{N}) unterhalb eines vorgegebenen Grenzwertes liegt, **dadurch gekennzeichnet, dass** für einen solchen Fall die elektrische Leistung somit gegenüber einem Soll-Wert, welcher bei einer ordnungsgemässen Amplitude der Netzspannung (U_{N}) eingestellt werden würde, auf einen Wert größer als Null reduziert wird.

2. Antriebsvorrichtung (2) nach Anspruch 1, welche zum Antreiben einer Wäschetrommel (3) des Hausgeräts (1) ausgebildet ist.

3. Antriebsvorrichtung (2) nach einem der Ansprüche 1 und 2, **dadurch gekennzeichnet, dass** der Antriebsmotor (4) ein bürstenloser Gleichstrommotor, insbesondere mit drei Phasensträngen, ist.

4. Antriebsvorrichtung (2) nach einem der vorigen Ansprüche, **dadurch gekennzeichnet, dass** die Steuereinrichtung (10) dazu ausgebildet ist, in einem Schleuderbetrieb des Hausgeräts (1) die elektrische Leistung zu begrenzen.

5. Antriebsvorrichtung (2) nach einem der vorigen Ansprüche, **dadurch gekennzeichnet, dass** die Antriebsvorrichtung (2) eine Gleichspannungsquelle (11) zum Bereitstellen einer Zwischenkreisgleichspannung (U_{Z}) aus der Netzspannung (U_{N}) aufweist und die Steuereinrichtung (10) dazu ausgebildet ist, die Zwischenkreisgleichspannung (U_{Z}) als Messgröße (U_{S}) zu erfassen.

6. Antriebsvorrichtung (2) nach einem der vorigen Ansprüche, **dadurch gekennzeichnet, dass** eine Kennlinie und/oder eine mathematische Gleichung, die einen Zusammenhang zwischen der elektrischen Leistung und der Messgröße (U_{S}) wiedergibt, in der Steuereinrichtung (10) abgelegt ist und die Steuereinrichtung (10) dazu ausgebildet ist, gemäß der abgelegten Kennlinie und/oder der Gleichung die elektrische Leistung zu begrenzen.

7. Antriebsvorrichtung (2) nach einem der vorigen Ansprüche, **dadurch gekennzeichnet, dass** die Steuereinrichtung (10) dazu ausgebildet ist, eine Stromstärke eines durch eine Wicklung des Antriebsmotors (4) fließenden Motorstromes (I₁, I₂, I₃) zu erfassen und die elektrische Leistung auf einen solchen Wert zu begrenzen, bei welchem die Stromstärke des Motorstromes (I₁, I₂, I₃) unterhalb eines vorgegebenen Schwellenwertes verbleibt.

8. Hausgerät (1) mit einer Antriebsvorrichtung (2) und einer durch diese antreibbaren Komponente (3), bei dem die Antriebsvorrichtung (2) einen elektrischen Antriebsmotor (4) und eine Steuereinrichtung (10) zum Einstellen einer an den Antriebsmotor (4) abgegebenen elektrischen Leistung aufweist, wobei die Steuereinrichtung (10) dazu ausgebildet ist, eine mit einer Amplitude einer Netzspannung (U_{N}), mit welcher die Antriebsvorrichtung (2) versorgbar ist, korrelierte Messgröße (U_{S}) zu erfassen, anhand der Messgröße (U_{S}) zu erkennen, ob die Amplitude der Netzspannung (U_{N}) unterhalb eines vorgegebenen Grenzwertes liegt **dadurch gekennzeichnet, dass** für einen solchen Fall die elektrische Leistung somit gegenüber einem Soll-Wert, welcher einer ordnungsgemässen Amplitude der Netzspannung (UN) eingestellt werden würde, auf einen Wert größer als Null reduziert wird.

9. Verfahren zum Betreiben eines Hausgeräts (1), bei welchem eine Komponente (3) des Hausgeräts (1) durch einen elektrischen Antriebsmotor (4) mechanisch angetrieben wird und eine an den Antriebsmotor (4) abgegebene elektrische Leistung mithilfe einer Steuereinrichtung (10) eingestellt wird, wobei die Steuereinrichtung (10) eine mit einer Amplitude einer Netzspannung (U_{N}), mit welcher das Hausgerät (1) versorgt wird, korrelierte Messgröße (U_{S}) erfasst, anhand der Messgröße (U_{S}) erkennt, ob die Amplitude der Netzspannung (U_{N}) unterhalb eines vorgegebenen Grenzwertes liegt **dadurch gekennzeichnet, dass** für einen solchen Fall die elektrische Leistung somit gegenüber einem Soll-Wert, welcher einer ordnungsgemässen Amplitude der Netzspannung (UN) eingestellt werden würde, auf einen Wert größer als Null reduziert.

## Claims

1. Drive device (2) for driving a component (3) of a domestic appliance (1), comprising an electric drive motor (4) and a control device (10) for setting an electrical power delivered to the drive motor (4), wherein the control device (10) is constructed for the purpose of detecting a measurement variable (U_{S}) correlated with an amplitude of a mains voltage (U_{N}) with which the drive device (2) can be supplied and of recognising on the basis of the measurement variable (U_{S}) whether the amplitude of the mains voltage (U_{N}) lies below a predetermined limit value, **characterised in that** for such a case the electrical power is reduced, thus relative to a target value which would have been set in the case of a correct amplitude of the mains voltage (U_{N}), to a value greater than zero.

2. Drive device (2) according to claim 1, which is constructed for driving a laundry drum (3) of the domestic appliance (1).

3. Drive device (2) according to one of claims 1 and 2, **characterised in that** the drive motor (4) is a brushless direct current motor, particularly with three phases.

4. Drive device (2) according to any one of the preceding claims, **characterised in that** the control device (10) is constructed for the purpose of limiting the electrical power in spinning operation of the domestic appliance (1).

5. Drive device (2) according to any one of the preceding claims, **characterised in that** the drive device (2) comprises a direct voltage source (11) for providing an intermediate circuit direct voltage (U_{Z}) from the mains voltage (U_{N}) and the control device (10) is constructed for the purpose of detecting the intermediate circuit direct voltage (U_{Z}) as the measurement variable (U_{S}).

6. Drive device (2) according to any one of the preceding claims, **characterised in that** a plot and/or mathematical equation reproducing a correlation between the electrical power and the measurement variable (U_{S}) is filed in the control device (10) and the control device (10) is constructed for the purpose of limiting the electrical power in accordance with the filed plot and/or equation.

7. Drive device (2) according to any one of the preceding claims, **characterised in that** the control device (10) is constructed for the purpose of detecting amperage of a motor current (I₁, I₂, I₃) flowing through a winding of the drive motor (4) and limiting the electrical power to a value at which the amperage of the motor current (I₁, I₂, I₃) remains below a predetermined threshold value.

8. Domestic appliance (1) and a drive device (2) and a component (3) drivable by this, in which the drive device (2) comprises an electric drive motor (4) and a control device (10) for setting an electrical power delivered to the drive motor (4), wherein the control device (10) is constructed for the purpose of detecting a measurement variable (U_{S}) correlated with an amplitude of a mains voltage (U_{N}) with which the drive device (2) can be supplied and of recognising on the basis of the measurement variable (U_{S}) whether the amplitude of the mains voltage (U_{N}) lies below a predetermined limit value, **characterised in that** for such a case the electrical power is reduced, thus relative to a target value which would have been set in the case of a correct amplitude of the mains voltage (U_{N}), to a value greater than zero.

9. Method of operating a domestic appliance (1), in which a component (3) of the domestic appliance (1) is mechanically driven by an electric drive motor (4) and an electrical power delivered to the drive motor (4) is set with help of a control device (10), wherein the control device (10) detects a measurement variable (U_{S}) correlated with an amplitude of a mains voltage (U_{N}) with which the domestic appliance (1) is supplied and recognises on the basis of the measurement variable (U_{S}) whether the amplitude of the mains voltage (U_{N}) lies below a predetermined limit value, **characterised in that** for such a case it reduces the electrical power, thus relative to a target value which would have been set in the case of a correct amplitude of the mains voltage (U_{N}), to a value greater than zero.

## Revendications

1. Dispositif d'entraînement (2) destiné à entraîner un composant (3) d'un appareil ménager (1), comprenant un moteur d'entraînement électrique (4) et un dispositif de commande (10) destiné à régler une puissance électrique déchargée sur le moteur d'entraînement (4), le dispositif de commande (10) étant réalisé pour enregistrer une grandeur de mesure (U_{S}) corrélée avec une amplitude d'une tension de réseau (U_{N}), avec laquelle le dispositif d'entraînement (2) peut être alimenté, pour identifier à l'aide de la grandeur de mesure (U_{S}) si l'amplitude de la tension de réseau (U_{N}) est située en dessous d'une valeur limite prédéfinie, **caractérisé en ce que** pour un tel cas, la puissance électrique est ainsi réduite, par rapport à une valeur théorique, laquelle serait réglée avec une amplitude correcte de la tension de réseau (U_{N}), à une valeur plus grande que zéro.

2. Dispositif d'entraînement (2) selon la revendication 1, lequel est réalisé pour entraîner un tambour à linge (3) de l'appareil ménager (1).

3. Dispositif d'entraînement (2) selon l'une quelconque des revendications 1 et 2, **caractérisé en ce que** le moteur d'entraînement (4) est un moteur à courant continu sans balai, notamment avec trois conducteurs de phase.

4. Dispositif d'entraînement (2) selon l'une quelconque des revendications précédentes, **caractérisé en ce que** le dispositif de commande (10) est réalisé pour limiter la puissance électrique dans un régime d'essorage de l'appareil ménager (1).

5. Dispositif d'entraînement (2) selon l'une quelconque des revendications précédentes, **caractérisé en ce que** le dispositif d'entraînement (2) présente une source de tension continue (11) destinée à fournir une tension continue de circuit intermédiaire (U_{Z}) à partir de la tension de réseau (U_{N}) et **en ce que** le dispositif de commande (10) est réalisé pour enregistrer la tension continue de circuit intermédiaire (U_{Z}) en tant que grandeur de mesure (U_{S}).

6. Dispositif d'entraînement (2) selon l'une quelconque des revendications précédentes, **caractérisé en ce qu'**une courbe caractéristique et/ou une équation mathématique qui représentent un rapport entre la puissance électrique et la grandeur de mesure (U_{S}) sont mémorisées dans le dispositif de commande (10) et **en ce que** le dispositif de commande (10) est réalisé pour limiter la puissance électrique selon la courbe caractéristique mémorisée et/ou l'équation mémorisée.

7. Dispositif d'entraînement (2) selon l'une quelconque des revendications précédentes, **caractérisé en ce que** le dispositif de commande (10) est réalisé pour enregistrer une intensité de courant d'un courant de moteur (I₁, I₂, I₃) circulant à travers un enroulement du moteur d'entraînement (4) et pour limiter la puissance électrique à une telle valeur à laquelle l'intensité de courant du courant de moteur (I₁, I₂, I₃) reste en dessous d'une valeur seuil prédéfinie.

8. Appareil ménager (1) muni d'un dispositif d'entraînement (2) et d'un composant (3) entraînable par celui-ci, dans lequel le dispositif d'entraînement (2) présente un moteur d'entraînement électrique (4) et un dispositif de commande (10) destiné à régler une puissance électrique déchargée sur le moteur d'entraînement (4), le dispositif de commande (10) étant réalisé pour enregistrer une grandeur de mesure (U_{S}) corrélée avec une amplitude d'une tension de réseau (UN), avec laquelle le dispositif d'entraînement (2) peut être alimenté, pour identifier à l'aide de la grandeur de mesure (U_{S}) si l'amplitude de la tension de réseau (U_{N}) est située en dessous d'une valeur limite prédéfinie, **caractérisé en ce que** pour un tel cas, la puissance électrique est ainsi réduite, par rapport à une valeur théorique, laquelle serait réglée avec une amplitude correcte de la tension de réseau (U_{N}), à une valeur plus grande que zéro.

9. Procédé de fonctionnement d'un appareil ménager (1), dans lequel un composant (3) de l'appareil ménager (1) est entraîné mécaniquement par un moteur d'entraînement électrique (4) et dans lequel une puissance électrique déchargée sur le moteur d'entraînement (4) est réglée au moyen d'un dispositif de commande (10), le dispositif de commande (10) enregistrant une grandeur de mesure (U_{S}) corrélée avec une amplitude d'une tension de réseau (U_{N}), avec laquelle le dispositif d'entraînement (2) est alimenté, identifiant à l'aide de la grandeur de mesure (U_{S}) si l'amplitude de la tension de réseau (U_{N}) est située en dessous d'une valeur limite prédéfinie, **caractérisé en ce que** pour un tel cas, la puissance électrique est ainsi réduite, par rapport à une valeur théorique, laquelle serait réglée avec une amplitude correcte de la tension réseau (U_{N}), à une valeur plus grande que zéro.
